Europäisches Patentamt

European Patent Office

Office européen des brevets

(19)

(11) Publication number: **0 209 505**
**B1**

# EUROPEAN PATENT SPECIFICATION

(12)

(45) Date of publication of the patent specification:
**19.09.90**

(51) Int. Cl.⁵: **B29C 33/10**
**// B29K105:16**

(21) Application number: **86850236.0**

(22) Date of filing: **27.06.86**

(54) A valve for ventilating casting dies or moulds.

(30) Priority: **03.07.85 SE 8503311**

(43) Date of publication of application:
**21.01.87 Bulletin 87/4**

(45) Publication of the grant of the patent:
**19.09.90 Bulletin 90/38**

(84) Designated Contracting States:
**AT BE CH DE FR GB IT LI LU NL**

(56) References cited:
**US-A- 2 520 263**
**US-A- 3 160 928**

**POLYMER CHEMISTRY, week 1985/01, page 13, J5-A, TOYJ, A32, 85003108/01; & JP-A-59 202 828 (TOYO SODA MFG K.K. (HODO)) 16-11-1984**
**PATENT ABSTRACTS OF JAPAN, vol. 10, no. 242 (M-509)[2298], 21st August 1986; & JP-A-61 74 752 (ATSUGI MOTOR PARTS CO. LTD) 17-04-1986**

(73) Proprietor: **Shires Limited, Guiseley, Leeds LS20 8AP(GB)**

(72) Inventor: **Lundmark, Gunnar, Bläbärsvägen 3, S-139 00 Värmdö(SE)**

(74) Representative: **Jennings, Nigel Robin et al, KILBURN & STRODE 30 John Street, London WC1N 2DD(GB)**

## Description

The present invention relates to a ventilating valve for ventilating casting dies or moulds, the valve being of the kind defined in the pre-characterizing clause of Claim 1.

It is now possible to cast sanitary products, such as sinks, wash basins and like articles from polymer materials with ballast. Such polymer materials function as binders for silica sand of cristobalitic structure. A curing agent, preferably in the form of an organic oxidizing agent, is added to impart sufficient hardness to the material. The casting compound or material can be caused to harden, or set, at a selected elevated temperature, e.g. 90°C, by selecting a suitable combination of the aforesaid substances. The composition of the curing agents used also controls the setting time, which for practical reasons is selected between 15 and 45 minutes. The cast article is held in the die or mould during the setting period, with the die parts held together under the requisite pressure.

Manufacture is commenced with mixing the starting materials together in a pressure tank at room temperature. When mixing of the starting materials is complete, the tank is closed and subjected to a pressure of approximately 2 bars. The simplest method of maintaining this pressure is to introduce pressurized air into the tank. The pressurized air then forces the mixture of starting materials through an infeed conduit leading from the pressure tank to the forming tool. The forming tool, i.e. the die or mould, comprises in its simplest form two parts, i.e. an upper and a lower half. The die or mould halves are brought together laterally, with the article cast on end. When casting, the casting material is introduced into the die from beneath, with the air present between the die halves rising upwards and being released through a ventilating valve. Hitherto this valve has included a transparent, reinforced, robust plastic hose or riser. When the casting material has advanced up into the hose, the supply of casting material is stopped by closing a gate valve. The plastic hose connected to the ventilating valve is then folded back through 180° and sealingly closed with a ring in its folded state. Hardening of the casting material is then initiated, by heating the die halves. Because the hose connected to the ventilating valve is sealed, it has been possible to press the die halves together with the aid of hydraulic cylinders, to a pressure of about 10 bars. This provides a cast article with maximum surface smoothness.

When the cast article has solidified or hardened throughout, the die halves can be separated and the sprue and exid flash or stalk subsequently removed from the article. In this regard, the flash is knocked-off and the mark left behind is smoothed and polished. Since it is practically impossible to remove the hard core of casting material from a hose of the aforesaid kind, the hose cannot be used more than once.

From US-A 3 160 928 there is known a core mould vent plug, including a wire mesh diaphragm. This diaphragm is acting in catching sand, but letting air through, in production of sand blown cores. However, in the taught application it does not seem adequate to alter for use in casting curing polymer materials with ballast, which ballast being sand should be stopped on the diaphragm, while the polymer material is pouring through.

For the purpose of eliminating the necessity of scrapping a section of the hose, and for the purpose of simplifying the operation of filling the mould or die with casting material, there is provided in accordance with the invention a die-ventilating valve having the characteristic features set forth in Claim 1. When using a valve constructed in accordance with the invention, all that need be scrapped subsequent to casting is a small net disc having an area of some very few square centimeters, e.g. 2 cm².

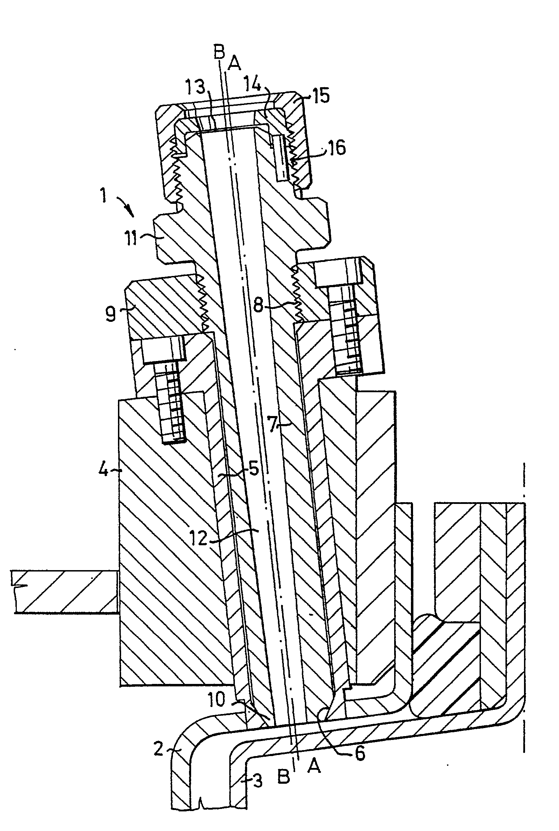

So that the invention will be more readily understood an exemplifying embodiment of a ventilating valve according to the invention will now be described in more detail with reference to the accompanying drawing, the single figure of which illustrates one such valve in cross-section.

The valve 1 is firmly mounted on one of the die or mould halves 2,3, preferably the upper die half 2, as illustrated in the drawing. The die and the valve are both made of steel. The upper die half includes an attachment part 4 for an attachment sleeve 5 which extends through a leadthrough or bushing in the attachment part and passes sealingly through a valve opening in the inner wall of the die half 2. The attachment sleeve 5 terminates flush with the inner surface of the inner wall of the upper disc half 2, and the lower end of the sleeve is provided with an inwardly directed part which converges towards the longitudinal axis A-A of the sleeve 5 and which forms a conical seat 6 for a valve pipe 7. The upper part of the sleeve 5 has a screwthreaded section 8 in the bushing or leadthrough which can be effected, for example, by attaching a securing nut above the attachment sleeve.

The bottom end 10 of the valve pipe 7 is bevelled to a form which corresponds to the form of the conical seat 6 of the sleeve 5. The valve pipe has provided at the top thereof an external screwthreaded section which enables the valve pipe to be screwed into the sleeve until the bevelled end of the pipe lies against the conical seat 6. As will be seen from the drawing, the respective screwthreaded sections of the valve pipe and the attachment sleeve co-act with one another in a manner which renders it unnecessary to screw down the valve pipe to a maximum in order to establish sealing engagement with the seat. Arranged above the screwthreaded section of the valve pipe 7 is a grip means 11 for accommodating a spanner, wrench or some like tool. It is also possible, of course, for the grip means per se to have the form of a permanent spanner means or like turning device.

The valve pipe 7 also incorporates an outlet passage 12, the longitudinal axis B-B of which is eccentric in relation to the screwing axis A-A. This passage diverges upwardly in a direction away from the interior of the die.

The outlet end of the outlet passage 12 is closed by a net disc 13 which is secured by a washer or plate 14, which is urged against the end of the valve pipe by a lock nut 15 screwed onto an external screwthread 16 formed above the grip means 11 on the valve pipe. The net disc 13 has a mesh such as to allow the polymer material present in the casting mix to pass through the net while preventing silica sand from passing therethrough, so as to form a sand plug beneath the net. Subsequent to filling the die sufficiently, the plug obtains a dimension which enables it to withstand the high curing pressure of approximately 10 bars. As an additional safety-guard, in the event of the net disc being pressed out at the beginning of the curing sequence, a piece of hose can be connected to the lock nut 15, this piece of hose incorporating in one end thereof a sinter-metal plug permeable to air but impermeable to casting material.

When curing of the casting material is complete, the lock nut 15 is unscrewed and the valve pipe 7 rotated about its longitudinal axis. Due to the eccentricity between the outlet-passage axis and the axis of rotation, the flash or stalk in the outlet passage will be knocked-off at the inlet end of said passage upon rotation of the valve pipe 7. The removed flash or stalk can then be pressed out through the outlet end of the outlet passage, this removal being facilitated by the fact that the outlet passage diverges in said direction.

The described embodiment is not restrictive of the invention, since the scope of the invention is restricted solely by the following claims.

## Claims

1. A ventilating valve for a die or mould intended to be filled with a mixture of a polymer material and a ballast material, characterized by a valve pipe (7) capable of being screwed into the die or mould and having an outlet passage (12) which is arranged eccentrically in relation to the screwing axis (A-A) and which communicates at one end thereof with the interior of the die or mould and which is closed at the other end thereof with a net disc (13) having a mesh which allows polymer material present in the casting mixture to pass through the net while preventing the ballast material from leaving the valve pipe.

2. A valve according to Claim 1, characterized in that the outlet passage (12) in the valve pipe diverges in the outlet direction.

3. A valve according to Claim 1, characterized in that the net structure of the net disc (13) is such as to cause silica sand to agglomerate thereon to form a pressure-tight plug.

4. A valve according to Claim 2, characterized in that the end (10) of the valve pipe facing towards the interior of the die or mould is conical in shape; and in that the valve pipe can be screwed into a sleeve (5), the end of which facing the interior of the die or mould has a conical seat (6) against which said end (10) of the valve pipe is intended to abut sealingly when screwing in the valve pipe.

5. A valve according to Claim 4, characterized in that the end of the valve pipe remote from the die or mould has an external screwthreaded section (16); and in that a lock nut (15) which secures the net disc is screwed onto said end of the valve pipe.

6. A valve according to Claim 5, characterized in that a piece of hose is connected to the lock nut, said hose piece having located in one end a sinter-metal plug which is permeable to air but impermeable to casting material.

## Patentansprüche

1. Entlüftungsventil für eine Gießmatrize oder Form, die mit einer Mischung aus einem polymeren Material und einem Ballaststoff gefüllt werden soll, gekennzeichnet durch ein Ventilrohr (7), das in die Gießmatrize oder Form einschraubbar ist und einen Auslaßkanal (12) aufweist, der exzentrisch zur Schraubachse (A-A) angeordnet ist und an seinem einen Ende mit dem Inneren der Gießmatrize oder Form in Verbindung steht und an seinem anderen Ende durch eine Netzscheibe (13) verschlossen ist, welche eine Maschenweite besitzt, die dem in der Gießmischung enthaltenden polymeren Material den Durchgang durch das Netz gestattet, während sie den Ballaststoff am Verlassen des Ventilrohrs hindert.

2. Ventil nach Anspruch 1, dadurch gekennzeichnet, daß der Auslaßkanal (12) in dem Ventilrohr sich in Auslaßrichtung erweitert.

3. Ventil nach Anspruch 1, dadurch gekennzeichnet, daß die Netzstruktur der Netzscheibe (13) so ausgelegt ist, daß Silikasand daran zum Agglomerieren gebracht wird, um einen druckdichten Stopfen zu bilden.

4. Ventil nach Anspruch 2, dadurch gekennzeichnet, daß das Ende (10) des Ventilrohrs, das gegen das Innere der Gießmatrize oder Form gerichtet ist, eine konische Form aufweist; und daß das Ventilrohr in eine Hülse (5) einschraubbar ist, deren gegen das Innere der Gießmatrize oder Form gerichtete Ende einen konischen Sitz (6) aufweist, gegen den sich selbiges Ende (10) abdichtend abstützen soll, wenn das Ventilrohr eingeschraubt wird.

5. Ventil nach Anspruch 4, dadurch gekennzeichnet, daß das fernab von der Gießmatrize oder Form liegende Ende des Ventilrohrs einen mit Außengewinde versehenen Abschnitt (16) aufweist; und daß eine Klemmutter (15), die die Netzscheibe sichert, auf selbiges Ende des Ventilrohres aufgeschraubt ist.

6. Ventil nach Anspruch 5, dadurch gekennzeichnet, daß ein Stück eines Schlauches mit der Klemmmutter verbunden ist, wobei das Schlauchstück in einem Ende einen Stopfen aus Sintermetall enthält, der luftdurchlässig, jedoch undurchlässig für Gießmaterial ist.

## Revendications

1. Une soupape de ventilation pour une matrice ou un moule destiné à être rempli d'un mélange d'un matériau polymère et d'un matériau de charge, caractérisée par une conduite de soupape (7) susceptible d'être vissée dans la matrice ou le moule et comportant un passage de sortie (12) qui est disposé excentriquement par rapport à l'axe de vissage (A-A) et qui communique à une des ses extrémités avec l'intérieur de la matrice ou du moule et qui est obturé à son autre extrémité par un disque à mailles (13) dont la maille permet au matériau polymère présent dans le mélange de moulage de traverser les mailles tout en empêchant le matériau de charge de quitter la conduite de soupape.

2. Une soupape selon la revendication 1, caractérisée en ce que le passage de sortie (12) dans le conduite de soupape diverge vers l'extérieur.

3. Une soupape selon la revendication 1, caractérisée en ce que la structure de maille du disque à mailles (13) est telle qu'elle y provoque l'agglomération du sable siliceux pour former un bouchon étanche à la pression.

4. Une soupape selon la revendication 2, caractérisé en ce que l'extrémité (10) du conduit de valve dirigée vers l'intérieur de la matrice ou du moule présente une forme conique, et en ce que la conduite de soupape peut être vissée dans un manchon (5), dont l'extrémité faisant face à l'intérieur de la matrice ou du moule présente un siège conique (6) sur lequel ladite extrémité (10) de la conduite de soupape est destinée à venir en butée de façon étanche lorsqu'elle est vissée dans la conduite de valve.

5. Une soupape selon la revendication 4, caractérisé en ce que l'extrémité de la conduite de soupape placée à distance de la matrice ou du moule comporte une partie extérieure munie d'un filetage (16); et en ce qu'un écrou de blocage (15) qui sert à fixer le disque à mailles est vissé sur ladite extrémité de la conduite de soupape.

6. Une soupape selon la revendication 5, caractérisé en ce qu'une partie de tuyau flexible est reliée à l'écrou de blocage, ladite partie de tuyau flexible comportant, à l'une de ses extrémités, un bouchon en métal fritté qui est perméable à l'air mais imperméable au matériau de moulage.